(19) Europäisches Patentamt
European Patent Office
Office européen des brevets

(11) Veröffentlichungsnummer: **0 218 089**
**B1**

(12) **EUROPÄISCHE PATENTSCHRIFT**

(45) Veröffentlichungstag der Patentschrift: **22.06.88**

(51) Int. Cl.⁴: **C 07 C 103/58**, C 07 B 57/00, C 08 F 20/56

(21) Anmeldenummer: **86112059.0**

(22) Anmeldetag: **01.09.86**

(54) **Optisch aktive (Meth)-Acrylamide, Polymere daraus, Verfahren zu ihrer Herstellung und ihre Verwendung zur Racematspaltung.**

(30) Priorität: **11.09.85 DE 3532356**

(43) Veröffentlichungstag der Anmeldung: **15.04.87 Patentblatt 87/16**

(45) Bekanntmachung des Hinweises auf die Patenterteilung: **22.06.88 Patentblatt 88/25**

(84) Benannte Vertragsstaaten: **AT BE CH DE FR GB IT LI NL SE**

(56) Entgegenhaltungen:
**EP - A - 0 121 618**
**DE - A - 2 500 523**
**FR - A - 2 354 351**

(73) Patentinhaber: **BAYER AG, Konzernverwaltung RP Patentabteilung, D-5090 Leverkusen 1 Bayerwerk (DE)**

(72) Erfinder: **Schwartz, Ulrich, Dr., Wiesdorfer Platz 10, D-5090 Leverkusen 1 (DE)**
Erfinder: **Grosser, Rolf, Dr., Gellertstrasse 9, D-5090 Leverkusen 1 (DE)**
Erfinder: **Piejko, Karl-Erwin, Dr., Roggendorfstrasse 57, D-5000 Köln 80 (DE)**
Erfinder: **Bömer, Bruno, Dr., Max-Planck-Strasse 57, D-5060 Bergisch-Gladbach 2 (DE)**
Erfinder: **Arlt, Dieter, Prof. Dr., Rybniker Strasse 2, D-5000 Köln 80 (DE)**

**EP 0 218 089 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft optisch aktive (Meth)-Acrylamide, die daraus hergestellten optisch aktiven Polymere, Verfahren zur Herstellung der optisch aktiven Monomere und Polymere sowie die Verwendung der Polymere als Adsorbens, insbesondere als stationäre Phase zur chromatographischen Racematspaltung.

Ein wesentliches Problem der präparativen Chemie stellt die Trennung von racemischen Gemischen in die Antipoden dar. Hierzu gewinnen chromatographische Trennmethoden unter Verwendung optisch aktiver Adsorbentien als stationäre Phase immer mehr an Bedeutung. Bisherige Ergebnisse sind jedoch wenig zufriedenstellend. So ist der Trenneffekt der aus DE-OS 25.00.523 bekannten optisch aktiven Adsorbentien bei Racematen bestimmter Stoffklassen zum Teil so gering, dass der technischen Anwendbarkeit einer solchen Racematspaltung deutliche Grenzen gesetzt sind.

Es wurde nun gefunden, dass man mit Hilfe bestimmter optisch aktiver (Meth)-Acrylamidpolymerisate eine besonders gute Trennwirkung erhalten kann.

Die Erfindung betrifft somit optisch aktive (Meth)-Acrylamidmonomere der allgemeinen Formel 1

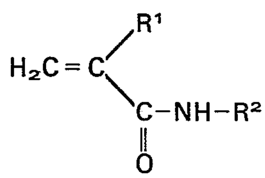 (1)

in welcher

$R^1$ Wasserstoff oder Methyl, und

$R^2$ eines der Stereoisomere der jeweils acht möglichen stereoisomeren Formen der optisch aktiven Reste der Formeln

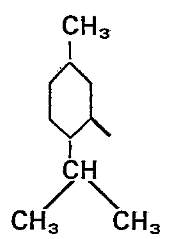 oder 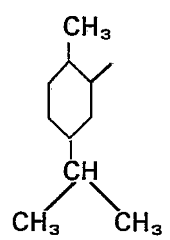

darstellen.

Bevorzugte Verbindungen der Formel 1 sind solche, in welchen

$R^1$ für Wasserstoff oder Methyl steht, und

$R^2$ ein Stereoisomer der jeweils acht möglichen stereoisomeren Formen des optisch aktiven Restes der Strukturformel

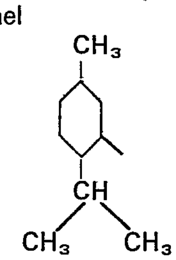

darstellt.

Besonders bevorzugt sind 1-Menthyl(meth)-acrylamid d-Mentyhl(meth)acrylamid und d-Neomenthyl(meth)acrylamid.

Die erfindungsgemässen Monomere werden erhalten, indem man optisch aktive Amine der Formel (2)

$$R^2-NH_2 \qquad (2)$$

in welcher

$R^2$ die oben angegebene Bedeutung hat,

oder deren Säureadditionsprodukte mit Acrylsäurederivaten der Formel (3)

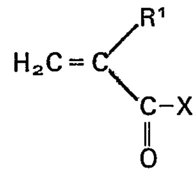 (3)

in welcher

X für eine abspaltbare Gruppe steht,

und $R^1$ die oben angegebene Bedeutung hat

gegebenenfalls in Anwesenheit einer Base in inerten organischen Lösungsmitteln umsetzt.

Als abspaltbare Gruppen seien erwähnt: Halogen, insbesondere Chlor oder Brom oder eine Gruppe der Formel $OR^3$, in der $R^3$ eine $C_1$-$C_4$-Alkylgruppe darstellt oder eine

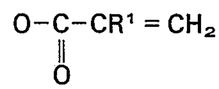

Gruppe. Darüber hinaus können auch unsymmetrische Säureanhydride eingesetzt werden.

Die als Ausgangsstoffe verwendeten Acrylsäurederivate der Formel 3 sind bekannt [Beilsteins Handbuch der organischen Chemie, Band 2, 3. Ergänzungswerk, Seite 1293; Band 2, Hauptwerk, Seite 400].

Die als Ausgangsstoffe verwendeten optisch aktiven Amine der Formel 2 sind bekannt oder können nach bekannten Methoden hergestellt werden [E. Beckmann, Liebigs Ann. Chem. *250*, 322 ff (1889), H.C. Brown, P.C. Garg, J. Am. Chem. Soc. *83*, 2952 (1961), F. Tutin, F.S. Kipping, J. Chem. Soc. London *85*, 65-78 (1904), J. Read, Chem. Rev. *7*, 1 (1930), H. Feltkamp, F. Koch und Tran Nhut Thanh, Liebigs Ann. Chem. *707*, 78 (1967)].

Geeignete Säureadditionsverbindungen der erfindungsgemäss verwendeten Amine sind Salze dieser Amine mit anorganischen oder organischen Säuren. Bevorzugt sind Mineralsäuren wie beispielsweise Salzsäure, Bromwasserstoffsäure, Schwefelsäure, Phosphorsäure oder organische Säuren wie Essigsäure, Methan-, Ethan-, Benzol- oder Toluolsulfonsäure.

Als Lösungsmittel eignen sich alle inerten organischen Lösungsmittel. Bevorzugt sind Kohlenwasserstoffe wie beispielsweise Benzol, Toluol, Xylol oder Erdölfraktionen, oder Halogenkohlenwasserstoffe wie beispielsweise Di-, Tri- oder Tetrachlormethan, Dichlorethan oder Trichlorethylen.

Als Basen eignen sich die üblichen anorganischen und organischen Basen. Bevorzugt sind Al-

kali- oder Erdalkalihydroxide wie beispielsweise Natrium-, Kalium-, Lithium-, Calcium- oder Bariumhydroxid, Alkali- oder Erdalkalicarbonate wie beispielsweise Natrium- oder Kaliumcarbonat, Alkalialkoholate wie beispielsweise Natriumethanolat, Kaliumethanolat, Natriummethanolat oder Kaliummethanolat oder Amine wie beispielsweise Triethylamin, Pyridin, Morpholin oder Piperidin.

Die Reaktionstemperaturen können in einem grösseren Bereich variiert werden. Im allgemeinen arbeitet man in einem Bereich von −20° C bis +100° C, bevorzugt von −10° C bis +60° C.

Die Umsetzung kann bei normalem, erhöhtem oder erniedrigtem Druck durchgeführt werden. Im allgemeinen arbeitet man bei Normaldruck.

Die Verbindungen der Formeln 2 und 3 werden bevorzugt im äquimolaren Mengenverhältnis eingesetzt.

Die Erfindung betrifft weiterhin optisch aktive vernetzte Polymerisate, die die wiederkehrende Struktureinheit

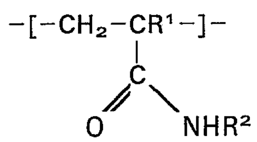

enthalten.

Diese Polymerisate besitzen folgende Eigenschaften:

Quellungsgrad

$$\left[\frac{\text{Volumen gequollen}}{\text{Volumen ungequollen}}\right]: 1{,}1\text{-}5;\ \text{bevorzugt } 1{,}4\text{-}4;$$

besonders bevorzugt 2-3,

gemessen in Toluol/Essigester (Volumenverhältnis 3:2)

Schüttvolumen [ml/g]:1,5-2,5; bevorzugt 1,6-2; besonders bevorzugt 1,6-1,8,

Korngrössenverteilung [µm]: 1-500; bevorzugt 1-200; besonders bevorzugt 1-100,

Stickstoffgehalt [%] (ohne N im Vernetzer): 3,5-6,3, bevorzugt 4,5-6,2; besonders bevorzugt 5,5-6;

Stickstoffgehalt [%] (mit N im Vernetzer): 6,3-13; bevorzugt 6,5-10; besonders bevorzugt 6,5-7,5.

Diese erfindungsgemässen Polymerisate werden hergestellt, indem man das Monomer der Formel 1 mit 0,5 bis 50 Mol-% vorzugsweise mit 1 bis 20 Mol-%, insbesondere mit 5 bis 15 Mol-% (bezogen auf 1 Mol Monomer) eines geeigneten Vernetzers in an sich bekannter Weise polymerisiert.

Vorzugsweise betrifft die Erfindung ein Verfahren, bei dem die Polymerisation als Suspensionspolymerisation unter Verwendung einer inerten organischen Phase und einer wässerigen Lösung eines Schutzkolloids durchgeführt wird.

Die Erfindung betrifft insbesondere ein Verfahren, bei dem die Suspensionspolymerisation unter Verwendung von Toluol oder Chloroform als inerte organische Phase und einer wässerigen Lösung eines Schutzkolloids bestehend aus einem Copolymer aus Methacrylsäure mit Methylmethacrylat als Wasserphase durchgeführt wird.

Die Suspensionspolymerisation der erfindungsgemässen Monomere der Formel 1 kann auch in an sich bekannter Weise in Gegenwart eines zusätzlichen Radikalbildners durchgeführt werden.

Als Vernetzungsmittel kommen Verbindungen in Frage, die mindestens zwei polymerisierbare Vinylgruppen enthalten. Bevorzugte Vernetzungsmittel sind Alkandioldiacrylate mit etwa 8 bis 12, vorzugsweise mit 8 bis 10 Kohlenstoffatomen wie beispielsweise 1,4-Butandioldiacrylat, 1,3-Propandioldiacrylat oder 1,2-Ethylenglykoldiacrylat, oder Alkandioldimethacrylate mit etwa 10 bis 14, bevorzugt mit 10 bis 12 Kohlenstoffatomen wie beispielsweise 1,4-Butandioldimethacrylat, 1,3-Propandioldimethacrylat oder 1,2-Ethylenglykoldimethacrylat, aromatische Divinylverbindungen wie beispielsweise Divinylbenzol, Divinylchlorbenzol oder Divinyltoluol, Alkandicarbonsäurevinylester mit etwa 8 bis 14, vorzugsweise mit 8 bis 10 Kohlenstoffatomen wie beispielsweise Adipinsäuredivinylester, Benzoldicarbonsäuredivinylester, Terephthalsäuredivinylester, N,N'-Alkylendiacrylamide mit etwa 8 bis 12, bevorzugt mit 8 bis 10 Kohlenstoffatomen wie beispielsweise N,N'-Methylendiacrylamid, N,N'-Ethylendiacrylamid, N,N'-Methylendimethacrylamid oder N,N'-Ethylendimethacrylamid.

Als Radikalbildner kommen die üblichen Radikalbildner in Frage. Bevorzugt sind Peroxide wie beispielsweise Dibenzoylperoxid, Dilauroylperoxid oder Di-orthotolylperoxid oder Azoverbindungen wie beispielsweise Azobisisobuttersäurenitril (AIBN).

Die Reaktionskomponenten werden in einem organischen Lösungsmittel, vorzugsweise einem aromatischen Kohlenwasserstoff wie Benzol oder Toluol, oder einem Halogenkohlenwasserstoff wie Di-, Tri-, Tetrachlormethan oder 1,2-Dichlorethan, gelöst.

Es hat sich hierbei als vorteilhaft erwiesen, möglichst wenig Lösungsmittel zu verwenden. Die unterste Grenze ist hierbei durch die Löslichkeit der Monomere gegeben. Besonders vorteilhaft ist es, pro Gewichtsteil Monomer etwa 1 Gewichtsteil Lösungsmittel einzusetzen, oder soviel Lösungsmittel, dass sich die Monomere gerade lösen. Die organische Phase wird mit Hilfe eines wirksamen Rührers in einer wässerigen Lösung eines Schutzkolloids, bevorzugt in einer wässerigen Lösung eines Copolymers aus Methacrylsäure und Methylmethacrylat gut verteilt. Pro Gewichtsteil organische Phase verwendet man etwa 1 bis 20, bevorzugt etwa 2 bis 10 Gewichtsteile der wässerigen Phase. Das gerührte Gemisch wird unter einer Inertgasatmosphäre, vorzugsweise unter Stickstoff auf Temperaturen zwischen 30° C und 100° C, bevorzugt zwischen 40° C und 80° C erhitzt. Die Polymerisationsdauer liegt zwischen 4 und 12, bevorzugt zwischen 4 und 8 Stunden. Das auf diese Weise erhaltene Copolymerisat wird durch Filtration vom Reaktionsgemisch abgetrennt, durch gründliches Waschen mit Wasser und mit organischen Lösungsmitteln wie Methanol, Ethanol, Benzol, Toluol, Di-, Trichlormethan oder Aceton gereinigt und anschliessend getrocknet.

Besonders bevorzugt ist nach dem vorstehend beschriebenen Verfahren hergestelltes Polymerisat aus 1- bzw. d-Menthyl(meth)acrylamid bzw. d-Neomenthyl(meth)acrylamid.

Die Erfindung betrifft ausserdem die Verwendung der erfindungsgemässen Polymerisate zur chromatographischen Trennung von racemischen Gemischen in die optischen Antipoden.

Insbesondere betrifft die Erfindung die Verwendung der erfindungsgemässen Polymerisate zur chromatographischen Trennung von Wirkstoffracematen in die optischen Antipoden wie beispielsweise derivatisierte Aminosäuren, β-Lactamverbindungen, Pyrethroide, Pyrethroidsäuren, monocyclische oder bicyclische Terpenderivate, Nitro- oder Cyanodihydropyridine, Dihydropyridincarbonsäuren, -carbonsäureester oder -carbonamide, Dihydropyridinlactone oder Sulfonyldihydropyridine.

Überraschenderweise haben die erfindungsgemässen Polymerisate eine bessere Trennleistung als die aus dem Stand der Technik bekannten. So beträgt die optische Ausbeute bei der Trennung des Racemats von 1,4-Dihydro-2,6-dimethyl-5-nitro-4-(2-trifluormethylphenyl)-pyridincarbonsäure-methylester am erfindungsgemässen Adsorbens (gemäss Beispiel 4) 71% gegenüber 50% an dem aus DE-OS 25.00.523 bekannten Adsorbens, bestehend aus einem Copolymerisat von Methacrylsäure-(S)-1-phenylethylamid und 1,4-Butandiol-dimethacrylat. Ferner weist das erfindungsgemässe Polymerisat auch bei der Trennung grösserer Mengen racemischer Gemische eine gute Trennleistung auf, was für eine technische Anwendung von grossem Vorteil ist.

Die präparative Trennung von racemischen Gemischen in ihre optischen Antipoden unter Verwendung der erfindungsgemässen Polymerisate wird vorteilhafterweise säulenchromatographisch vorgenommen. Besonders vorteilhaft ist es hierbei, die chromatographische Trennung mit nach Teilchengrösse klassierten Polymerisaten durchzuführen, um optimale Trennleistungen zu erzielen. Solche klassierten Polymerisate können in an sich bekannter Weise z. B. durch Absieben oder Windsichten der erfindungsgemässen Polymerisate hergestellt werden.

Die Arbeitsmethodik der säulenchromatographischen Trennung ist dem Fachmann vertraut. Üblicherweise wird das Polymerisat im Fliessmittel suspendiert und die Suspension in eine Glassäule gefüllt. Nach Ablaufen des Fliessmittels wird das zu trennende Racemat, gelöst in möglichst wenig Fliessmittel, auf die Säule gebracht. Dann wird mit Fliessmittel eluiert, wobei das Eluat wie üblich in Fraktionen gesammelt wird.

Als Fliessmittel verwendet man übliche organische Lösungsmittel bzw. Lösungsmittelgemische, die das als Adsorbens eingesetzte Polymerisat zum Quellen bringen und das zu trennende Racemat zu lösen vermögen. Beispielhaft seien hier zu nennen: Kohlenwasserstoffe wie Benzol, Toluol oder Xylol, Ether wie Diethylether, Dioxan oder Tetrahydrofuran, Halogenkohlenwasserstoffe wie Di- oder Trichlormethan, Aceton, Acetonitril oder Essigester oder aber Gemische der genannten Lösungsmittel.

Als besonders geeignet haben sich Mischungen aus Toluol und Essigester erwiesen.

Die Zusammensetzung des Fliessmittels kann je nach Art und Eigenschaft des zu trennenden Racemats in üblicher Weise ausgewählt und optimiert werden.

Die Trennleistung des erfindungsgemässen Polymerisats wird anhand einiger Racemate mit Hilfe des Kapazitätsverhältnisses $k'_1$ und $k'_2$ und der Enantioselektivität α aufgezeigt, wobei $k'_1$, $k'_2$ und α wie folgt definiert sind:

$$\text{Kapazitätsverhältnis } k'_{1(2)} = \frac{t_{1(2)} - t_0}{t_0}$$

$t_0$ = Totzeit der Trennsäule

$t_{1(2)}$ = Retentionszeit des zuerst eluierten Enantiomers 1 bzw. des später eluierten Enantiomers 2

$$\text{Enantioselektivität } \alpha = \frac{k'_2}{k'_1}$$

## *I. Herstellung von (Meth)acrylamiden*

*Beispiel 1:*

Herstellung von 1-Menthylmethacrylamid

Zu 356 g (1,86 mol) 1-Menthylaminhydrochlorid und 376 g (3,71 mol) Triethylamin in 1,6 l Dichlormethan werden unter Rühren bei 0° C 194 g (1,86 mol) Methacrylsäurechlorid während 3 Std. zugetropft. Unter Erwärmen auf Raumtemperatur wird noch 2 Stunden nachgerührt. Das ausgefallene Triethylaminhydrochlorid wird abgesaugt und mit wenig Dichlormethan gewaschen. Die vereinigten organischen Phasen werden zweimal mit wässeriger Natriumchlorid-Lösung gewaschen, über Magnesiumsulfat getrocknet und einrotiert. Es wird aus Essigester oder Methanol/Wasser umkristallisiert, oder nach Zusatz von wenig 2,2'-Methylen-bis-(4-methyl-6-tert.-butylphenol) im Hochvakuum bei 140-143° C destilliert.

Ausbeute: 376 g (90% der Theorie)

Schmelzpunkt: 79-80° C

Drehwert: $[\alpha]_D^{20} = -87{,}1°$ ($C=1$, $CHCl_3$)

*Beispiel 2:*

Herstellung von d-Neomenthylmethacrylamid

Zu 191,7 g (1 Mol) d-Neomenthylaminhydrochlorid und 212,5 g (2,1 Mol) Triethylamin in 780 ml Dichlormethan wurden bei Raumtemperatur 104,5 g (1 Mol) Methacrylsäurechlorid zugetropft. Unter Erwärmen auf Raumtemperatur wird noch 12 Stunden nachgerührt. Es wird dreimal mit wässeriger Natriumchloridlösung gewaschen, die organische Phase über Magnesiumsulfat getrocknet und einrotiert. Es wird aus Essigester umkristallisiert.

Ausbeute: 194,5 g (87% der Theorie)

Schmelzpunkt: 111-112° C

Drehwert: $[\alpha]_D^{20} = +51{,}5°$ ($C=1$, $CH_2Cl_2$)

*Beispiel 3:*

Herstellung von 1-Menthylacrylamid

Zu 155,3 g (1 Mol) 1-Menthylamin und 101,2 g (1 Mol) Triethylamin in 400 ml Dichlormethan werden unter Rühren bei 0° C 90,51 g (1 Mol) Acrylsäurechlorid während 3 Std. zugetropft. Unter Erwärmen auf Raumtemperatur wird noch 12 Std. nachgerührt. Es wird dreimal mit wässeriger Natriumchloridlösung gewaschen, die organische Phase über Magnesiumsulfat getrocknet und einrotiert. Es wird aus Acetonitril umkristallisiert.
Ausbeute: 184,2 g (88% der Theorie)
Schmelzpunkt: 136-137° C
Drehwert: $[\alpha]_D^{20}=-85,7\%$ (C=1, $CHCl_3$)

*II. Herstellung eines Perlpolymerisats*

*Beispiel 4:*

Herstellung aus 1-Menthylmethacrylamid

In einer wässerigen Phase aus 450 ml Wasser und 200 ml einer 7,5%igen Lösung eines Copolymerisats aus gleichen Gewichtsteilen Methacrylsäure und Methylmethacrylat (Viskosität der mit NaOH auf pH 6 eingestellten Lösung: 3,6 Pa·s) wird eine Lösung aus 90 g 1-Menthylmethacrylamid, 10 g Ethylenglykoldimethacrylat und 0,5 g Azobisisobuttersäurenitril in 100 g Trichlormethan mit einer Rührgeschwindigkeit von 320 U/min verteilt und unter Stickstoff 6 Stunden auf 60° C erhitzt.

Das Polymerisat wird durch Filtration abgetrennt und durch Sedimentation in Wasser von Feinanteilen befreit. Es wird mit Aceton gewaschen und getrocknet.
Ausbeute: 77 g (77% der Theorie)
Eigenschaften:
a) Vor der Sedimentation:
Korngrössenverteilung 1-100 µm
b) Nach der Sedimentation:
Korngrössenverteilung 10-100 µm
Quellungsgrad (in Toluol/Essigester = 3/2 (v/v)): 2,4
Schüttvolumen: 1,7 ml/g
Stickstoffgehalt: 5,62%

*Beispiel 5:*

Herstellung eines Perlpolymerisats aus d-Neomenthylmethacrylamid

In einer wässerigen Phase aus 90 ml entmineralisiertem Wasser und 40 g einer 7%igen Lösung eines Copolymerisates aus gleichen Gewichtsteilen Methacrylsäure und Methylmethacrylat (Viskosität der auf pH 6,5 mit NaOH eingestellten 7%igen Lösung: 3,8 Pa·s), die mit NaOH auf pH 6,8 eingestellt wurde, wird eine Lösung aus 18 g d-Neomenthylmethacrylamid, 2 g Ethylenglykoldimethacrylat und 0,1 g Azoisobuttersäurenitril in 30 g Trichlormethan mit einer Rührgeschwindigkeit von 500 U/min verteilt und unter Stickstoff 2 Stunden bei 55° C und 7 Stunden bei 60° C polymerisiert. Der Ansatz wird mit 2 l Wasser verdünnt und der Überstand nach dem Absitzen der Perlen dekantiert. Die abgesetzten Perlen werden durch mehrmaliges Sedimentieren von allen Anteilen, die kleiner als 10 µm sind befreit und nach dem Waschen mit Aceton bei 60° C bis zur Gewichtskonstanz getrocknet.
Ausbeute: 16,2 g (81% der Theorie)
Eigenschaften:
a) Vor der Sedimentation:
Korngrössenverteilung ca. 1-80 µm
b) Nach der Sedimentation:
Korngrössenverteilung 10-80 µm
Quellungsgrad (in Toluol/Essigester 3:2, v:v): 1,53
Schüttvolumen: 2,16 ml/g
Stickstoffgehalt: 5,6%

*Beispiel 6:*

Herstellung eines Perlpolymerisats aus 1-Menthylacrylamid

In einer wässerigen Phase aus 450 ml Wasser und 200 ml einer 7,5%igen Lösung eines Copolymerisats aus gleichen Gewichtsteilen Methacrylsäure und Methylmethacryl (Viskosität der mit NaOH auf pH 6 eingestellten Lösung: 3,6 Pa·s) wird eine Lösung aus 84 g 1-Mentylacrylamid, 10 g Ethylenglykoldimethacrylat und 0,5 g Azobisisobuttersäurenitril in 100 g Trichlormethan mit einer Rührgeschwindigkeit von 320 U/min verteilt und unter Stickstoff 6 Stunden auf 60° C erhitzt.

Das Polymerisat wird durch Filtration abgetrennt und durch Sedimentation in Wasser von Feinanteilen befreit. Es wird mit Aceton gewaschen und getrocknet.
Ausbeute: 74 g (80% der Theorie)
Eigenschaften:
a) Vor der Sedimentation:
Korngrössenverteilung 1-100 µm
b) Nach der Sedimentation:
Korngrössenverteilung 10-100 µm
Quellungsgrad (in Toluol/Essigester = 3/2 (v/v)): 2,5
Schüttvolumen: 1,7 ml/g
Stickstoffgehalt: 5,27%

*III. Trennungen*

Im folgenden sind die Ergebnisse von chromatographischen Trennversuchen mit verschiedenen Racematen an einem Adsorbens bestehend aus dem unter II. beschriebenen Polymeren aufgeführt.

A. Trennsäule: 1,28 cm Durchmesser, 32 cm Schichthöhe, 10 g Polymerharz aus Beispiel 4

*Beispiel 7:*

(±)-3-Methoxycarbonyl-2,2-dimethyl-cyclopropancarbonsäure
Eluent=Toluol: Essigester=3:2
$k'_1 = 4,23$
$\alpha = 1,10$

*Beispiel 8:*

(±)-2-(4-Chlorphenyl)-3-methyl-butansäure
Eluent = Toluol: Essigester = 3:2
$k'_1 = 2,46$
$\alpha = 1,21$

*Beispiel 9:*

(±)-2,5,5-Trichlor-3,3-dimethyl-pentansäure
Eluent = Toluol: Essigester = 3:2
$k'_1$ = 4,50
α = 1,10

*Beispiel 10:*

(±)-Cis-Chrysanthemumsäure
Eluent = Toluol: Essigester = 3:2
$k'_1$ = 1,00
α = 1,17

*Beispiel 11:*

(±)-Trans-Chrysanthemumsäure
Eluent = Toluol: Essigester = 3:2
$k'_1$ = 1,84
α = 1,15

*Beispiel 12:*

(±)-Permethrinsäure
Eluent = Toluol: Essigester = 3:2
$k'_1$ = 1,63
α = 1,15

*Beispiel 13:*

(±)-Trans-Permethrinsäure
Eluent = Toluol: Essigester = 3:2
$k'_1$ = 2,44
α = 1,12

*Beispiel 14:*

(±)-Z-cis-2,2-dimethyl-3-[2-chlor-2-(4-chlorphenyl)vinyl]cyclopropancarbonsäure
Eluent = Toluol: Essigester = 3:2
$k'_1$ = 1,20
α = 1,21

*Beispiel 15:*

(±)-Z-trans-2,2-dimethyl-3-[2-chlor-2-(4-chlorphenyl)vinyl]cyclopropan-carbonsäure
Eluent = Toluol: Essigester = 3:2
$k'_1$ = 1,85
α = 1,13

*Beispiel 16:*

(±)-E-trans-2,2-dimethyl-3[2-chlor-2-(4-chlorphenyl)vinyl]cyclopropan-carbonsäure
Eluent = Toluol: Essigester = 3:2
$k'_1$ = 2,03
α = 1,04

*Beispiel 17:*

(±)-Cis-2,2-dimethyl-3-(1,2,2,2-tetrachlorethyl)cyclopropancarbonsäure
Eluent = Toluol: Essigester = 3:2
$k'_1$ = 1,77
α = 1,07

*Beispiel 18:*

(±)-Trans-2,2-dimethyl-3-(1,2,2,2-tetrachlorethyl)cyclopropancarbonsäure
Eluent = Toluol: Essigester = 3:2
$k'_1$ = 3,51
α = 1,13

*Beispiel 19:*

(±)-3-Formyl-2,2-dimethyl-cyclopropancarbonsäure
Eluent = Toluol: Essigester = 3:2
$k'_1$ = 3,70
α = 1,10

*Beispiel 20:*

(±)-1,4-Dihydro-2,6-dimethyl-5-nitro-4-(2-trifluormethylphenyl)-pyridin-3-carbonsäuremethylester
Eluent = Toluol: Essigester = 5:1
$k'_1$ = 5,49
α = 1,13

*Beispiel 21:*

(±)-4-(2-Benzylthiophenyl)-1,4-dihydro-2,6-dimethyl-5-nitro-pyridin-3-carbonsäuremethylester
Eluent = Toluol: Essigester = 5:1
$k'_1$ = 3,49
α = 1,10

*Beispiel 22:*

(±)-1,4-Dihydro-2,6-dimethyl-5-nitro-4-(2-trifluormethylphenyl)–pyridin-3-carbonsäure
Eluent = Toluol: Essigester = 1:1
$k'_1$ = 6,80
α = 1,40

*Beispiel 23:*

(±)-1,4-Dihydro-2,6-dimethyl-4-(3-nitrophenyl)-pyridin-3,5-dicarbonsäure-5-methylester
Eluent = Toluol: Essigester = 5:4
$k'_1$ = 7,60
α = 1,23

*Beispiel 24:*

(±)-1,4-Dihydro-2,6-dimethyl-4-(nitro-phenyl)-pyridin-3,5-dicarbonsäure-5-iso-propylester
Eluent = Toluol: Essigester = 5:4
$k'_1$ = 5,81
α = 1,28

*Beispiel 25:*

(±)-1,4-Dihydro-2,6-dimethyl-4-(2-nitrophenyl)-pyridin-3,5-dicarbonsäure-5-methylester
Eluent = Toluol: Essigester = 5:4
$k'_1$ = 6,50
α = 1,42

*Beispiel 26:*

(±)-1,4-Dihydro-2,6-dimethyl-3-nitro-4-(2-trifluormethylphenyl)pyridin
Eluent = Toluol: Essigester = 5:1
$k'_1$ = 4,5
α = 1,13

*Beispiel 27:*

(±)-1,4-Dihydro-2,6-dimethyl-4-(2-trifluormethylphenyl)pyridin-3,5-dicarbonsäure-5-ethylester

Eluent = Toluol: Essigester = 5:4
$k'_1 = 3{,}00$
$\alpha = 1{,}38$

*Beispiel 28:*

(±)-1,4-Dihydro-2,6-dimethyl-5-nitro-4-(2-trifluormethylphenyl)-pyridin-3-carbonsäure-(2-cyanoethyl)ester
Eluent = Toluol: Essigester = 5:1
$k'_1 = 6{,}72$
$\alpha = 1{,}10$

B. Trennsäule: 1,28 cm Durchmesser, 39 cm Schichthöhe, 15 g Polymerharz aus Beispiel 5

*Beispiel 29:*

(±)-cis-Chrysanthemumsäure
Eluent = Toluol: Essigester = 3:2
$k'_1 = 1{,}36$
$\alpha = 1{,}17$

*Beispiel 30:*

(±)-trans-Crysanthemumsäure
Eluent = Toluol: Essigester = 3:2
$k'_1 = 2{,}28$
$\alpha = 1{,}14$

*Beispiel 31:*

(±)-cis-Permethrinsäure
Eluent = Toluol: Essigester = 3:2
$k'_1 = 1{,}93$
$\alpha = 1{,}17$

*Beispiel 32:*

(±)-1,4-Dihydro-2,6-dimethyl-4-(3-nitrophenyl)-pyridin-3,5-dicarbonsäure-5-methylester
Eluent = Toluol: Essigester = 3:2
$k'_1 = 7{,}60$
$\alpha = 1{,}19$

*Beispiel 33:*

(±)-1,4-Dihydro-2,6-dimethyl-4-(2-trifluormethylphenyl)pyridin-3,5-dicarbonsäure-5-ethylester
Eluent = Toluol: Essigester = 3:2
$k'_1 = 3{,}61$
$\alpha = 1{,}45$

C. Trennsäule: 1,28 cm Durchmesser, 32 cm Schichthöhe, 11 g Polymerharz aus Beispiel 6

*Beispiel 34:*

(±)-1,4-Dihydro-2,6-dimethyl-4-(3-nitrophenyl)-pyridin-3,5-dicarbonsäure-5-methylester
Eluent = Toluol: Tetrahydrofuran = 3:2
$R_1 = 1{,}00$
$\alpha = 1{,}55$

*Beispiel 35:*

(±)-1,4-Dihydro-2,6-dimethyl-4-(2-trifluormethylphenyl)-pyridin-3,5-dicarbonsäure-5-ethylester
Eluent = Toluol: Tetrahydrofuran = 3:2
$R'_1 = 0{,}7$
$\alpha = 2{,}50$

*IV. Vergleichsbeispiel*

(±)-1,4-Dihydro-2,6-dimethyl-5-nitro-4-(2-trifluormethylphenyl)-pyridin-3-carbonsäuremethylester

Das Racemat wird an einer Trennsäule (1,28 cm Durchmesser, Schichthöhe 21 cm) chromatographiert, die 10 g eines Copolymerisates aus Methacrylsäure-(S)-1-phenylethylamid und 1,2-Ethylenglykol-dimethacrylat enthält. Als Elutionsmittel wird ein Toluol-Essigestergemisch (5:1, v/v) verwendet.

Die optische Ausbeute P bei einer chromatografischen Trennung eines Racemats kann bei gleichzeitiger Messung des Eluats mit einem konzentrationsabhängigen Detektor – beispielsweise einem Photometer – und einem Polarimeter zur Bestimmung der optischen Aktivität aus dem Flächenverhältnis der beiden Detektorkurven gemäss folgender Gleichung berechnet werden:

$$P = \frac{F\alpha}{C \cdot F_E}; \text{ mit}$$

$F_\alpha$ = Fläche des Polarimeter-Chromatogramms
$F_E$ = Fläche des Photometerchromatogramms

$$C = \frac{S_{\alpha(+)}}{S_{E(+)}} = \frac{S_{\alpha(-)}}{S_{E(-)}}$$

$S_{\alpha(+)}$, $S_{E(+)}$ = Schreiberausschlag des Polarimeters bzw. Photometers für eine Eluatfraktion, die das reine (+)-Enantiomer enthält.
$k'_1 = 15{,}6$
$\alpha = 1{,}10$
optische Ausbeute: 50%

Die optische Ausbeute ist wesentlich niedriger als bei der Trennung des Racemats an einem erfindungsgemässen Polymerisat (aus Beispiel 4) mit dem eine optische Ausbeute von 71% erhalten wird (Trennbedingungen siehe Beispiel 20).

## Patentansprüche

1. Optisch aktive (Meth)-Acrylamidmonomere der allgemeinen Formel 1

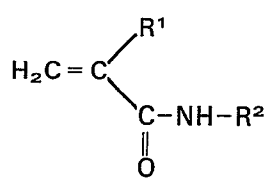
(1)

in welcher
$R^1$ Wasserstoff oder Methyl, und
$R^2$ eines der Stereoisomere der jeweils acht möglichen stereoisomeren Formen der optisch aktiven Reste der Formeln

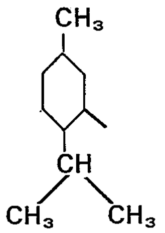

oder

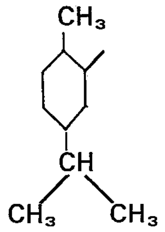

darstellen.

2. Verbindungen gemäss Anspruch 1, in denen

$R^1$ für Wasserstoff oder Methyl steht, und

$R^2$ ein Stereoisomer der jeweils acht möglichen stereoisomeren Formen des optisch aktiven Restes der Strukturformel

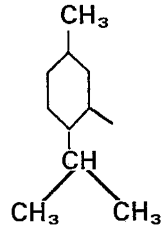

darstellt.

3. 1-Menthyl(meth)acrylamid.

4. d-Menthyl(meth)acrylamid.

5. d-Neomenthyl(meth)acrylamid.

6. Verfahren zur Herstellung von optisch aktiven (Meth)-Acrylamidmonomeren der allgemeinen Formel 1

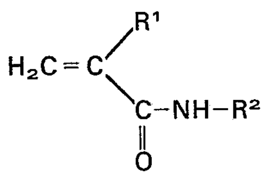
(1)

in welcher

$R^1$ Wasserstoff oder Methyl, und

$R^2$ eines der Stereoisomere der jeweils acht möglichen stereoisomeren Formen der optisch aktiven Reste der Formeln

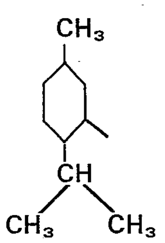

oder

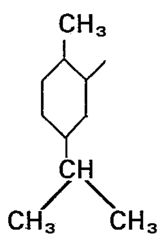

darstellen, dadurch gekennzeichnet, dass man optisch aktive Amine der Formel (2)

$$R^2-NH_2 \qquad (2)$$

in welcher

$R^2$ die oben angegebene Bedeutung hat, oder deren Säureadditionsprodukte mit Acrylsäurederivaten der Formel (3)

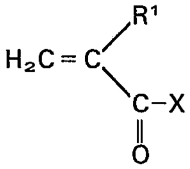
(3)

in welcher

X für eine abspaltbare Gruppe steht, und

$R^1$ die oben angegebene Bedeutung hat gegebenenfalls in Anwesenheit einer Base in inerten organischen Lösungsmitteln umsetzt.

7. Verfahren gemäss Anspruch 6 zur Herstellung von 1-Mentyl(meth)acrylamid, d-Mentyl-(meth)acrylamid oder d-Neomenthyl(meth)acrylamid.

8. Verfahren gemäss Ansprüche 6 und 7, dadurch gekennzeichnet, dass man die Umsetzung bei Temperaturen von −20 bis +100° C durchführt.

9. Verfahren gemäss Ansprüche 6 bis 8, dadurch gekennzeichnet, dass als Basen Alkali- und/oder Erdalkalihydroxid, Alkali- und/oder Erdalkalicarbonat, Alkalialkoholate oder Amine einsetzt.

10. Optisch aktive und vernetzte Polymerisate enthaltend die wiederkehrende Struktureinheit

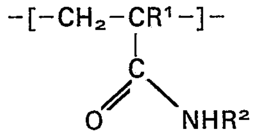

in denen

$R^1$ Wasserstoff oder Methyl, und

$R^2$ eines der Stereoisomere der jeweils acht möglichen stereoisomeren Formen der optisch aktiven Reste der Formeln

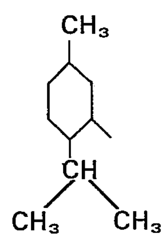

oder

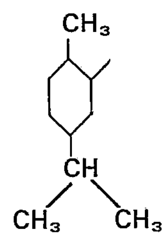

darstellen.

11. Optisch aktive und vernetzte Polymerisate gemäss Anspruch 10 mit folgenden Eigenschaften:

$$\left[\frac{\text{Volumen gequollen}}{\text{Volumen ungequollen}}\right]: 1{,}1\text{-}5,$$

gemessen in Toluol/Essigester (Volumenverhältnis 3:2),

Schüttvolumen [ml/g]: 1,5-2,5;

Korngrössenverteilung [µm]: 1-500;

Stickstoffgehalt [%] (ohne N im Vernetzer): 3,5-6,3,

Stickstoffgehalt [%] (mit N im Vernetzer): 6,3-13.

12. Optisch aktives und vernetztes Poly-1-menthyl(meth)-acrylamid, Poly-d-menthyl(meth)-acrylamid oder Poly-d-neomenthyl(meth)acrylamid.

13. Verfahren zur Herstellung von optisch aktiven und vernetzten Polymerisaten enthaltend die wiederkehrende Struktureinheit.

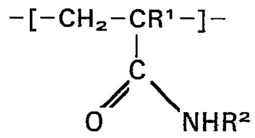

in denen

$R^1$ Wasserstoff oder Methyl, und

$R^2$ eines der Stereoisomere der jeweils acht möglichen stereoisomeren Formen der optisch aktiven Reste der Formeln

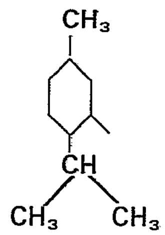

oder

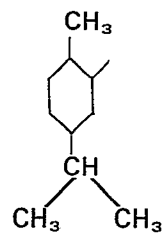

darstellen, dadurch gekennzeichnet, dass man ein Monomer der Formel 1

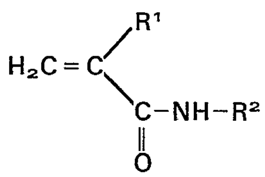

(1)

mit den oben bezeichneten Definitionen für $R^1$ und $R^2$ mit 0,5 bis 50 mol-% bezogen auf 1 Mol Monomer eines geeigneten Vernetzers in an sich bekannter Weise polymerisiert.

14. Verfahren gemäss Anspruch 13, dadurch gekennzeichnet, dass man 1 bis 20 Mol-% des Vernetzers einsetzt.

15. Verfahren gemäss Anspruch 13, dadurch gekennzeichnet, dass man 5 bis 15 Mol-% des Vernetzers einsetzt.

16. Verfahren gemäss Ansprüche 13 bis 15, dadurch gekennzeichnet, dass man als Vernetzer eine Verbindung mit mindestens zwei Vinylgruppen einsetzt.

17. Verfahren gemäss Ansprüche 13 bis 16, dadurch gekennzeichnet, dass man die Polymerisation als Suspensionspolymerisation durchführt.

18. Verfahren gemäss Ansprüche 13 bis 17, dadurch gekennzeichnet, dass man bei Temperaturen von 30 bis 100° C polymerisiert.

19. Verwendung der Polymerisate gemäss Ansprüche 10 bis 12 zur chromatographischen Trennung von racemischen Gemischen in die optischen Antipoden.

## Claims

1. Optically active (meth)acrylamide monomers of the general formula 1

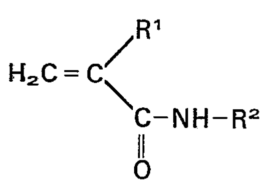

(1)

in which

$R^1$ represents hydrogen or methyl, and

$R^2$ represents one of the stereoisomers of the eight possible stereoisomeric forms of each of the optically active radicals of the formulae

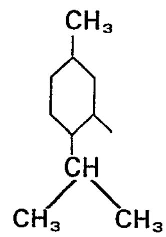

or

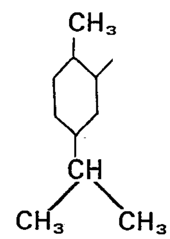

2. Compounds according to Claim 1, in which $R^1$ represents hydrogen or methyl, and $R^2$ represents one stereoisomer of the eight possible stereoisomeric forms, in each case, of the optically active radical of the structural formula

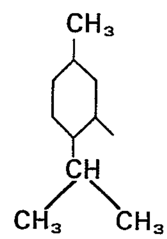

3. l-Menthyl(meth)acrylamide.

4. d-Menthyl(meth)acrylamide.

5. d-Neomenthyl(meth)acrylamide.

6. Process for the preparation of optically active (meth)acrylamide monomers of the general formula 1

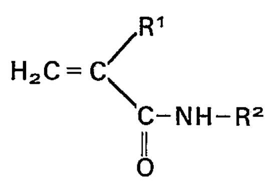

(1)

in which

$R^1$ represents hydrogen or methyl, and

$R^2$ represents one of the stereoisomers of the eight possible stereoisomeric forms of each of the optically active radicals of the formulae

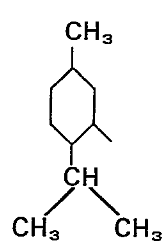

or

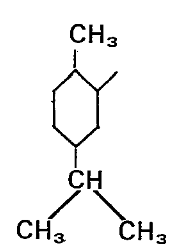

characterized in that optically active amines of the formula (2)

$$R^2-NH_2 \qquad (2)$$

in which

$R^2$ has the abovementioned meaning,

or of their acid addition products, are reacted with acrylic acid derivatives of the formula (3)

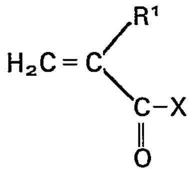

(3)

in which
X represents a group which can be eliminated, and
$R^1$ has the abovementioned meaning,
where appropriate in the presence of a base, in inert organic solvents.

7. Process according to Claim 6 for the preparation of l-menthyl(meth)acrylamide, d-menthyl-(meth)acrylamide or d-neomenthyl(meth)acrylamide.

8. Process according to Claims 6 and 7, characterized in that the reaction is carried·out at temperatures from −20 to +100° C.

9. Process according to Claims 6 to 8, characterized in that alkali metal and/or alkaline earth metal hydroxide, alkali metal and/or alkaline earth metal carbonate, alkali metal alcoholates or amines are used as bases.

10. Optically active and crosslinked polymers containing the repeating structural unit

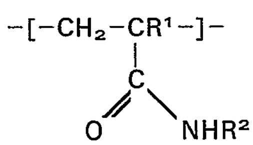

in which
$R^1$ represents hydrogen or methyl, and
$R^2$ represents one of the stereoisomers of the eight possible stereoisomeric forms of each of the optically active radicals of the formulae

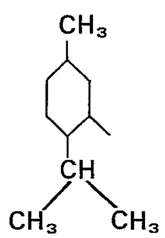

or

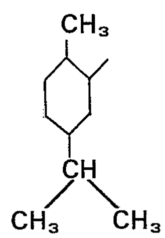

11. Optically active and crosslinked polymers according to Claim 10, with the following properties:
Degree of swelling

$$\left[\frac{\text{Volume swollen}}{\text{Volume unswollen}}\right]: 1.1\text{-}5;$$

measured in toluene/ethyl acetate (ratio by volume 3:2), bulk volume [ml/g]: 1.5-2.5;
particle size distribution [μm]: 1-500;
nitrogen content [%] (without N in the crosslinker): 3.5-6.3,
nitrogen content [%] (with N in the crosslinker): 6.3-13.

12. Optically active and crosslinked poly-l-menthyl-meth(acryl)amide, poly-d-menthyl(meth)-acrylamide or poly-d-neomenthyl(meth)acrylamide.

13. Process for the preparation of optically active and crosslinked polymers containing the repeating structural unit

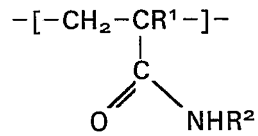

in which
$R^1$ represents hydrogen or methyl, and
$R^2$ represents one of the stereoisomers of the eight possible stereoisomeric forms of each of the optically active radicals of the formulae

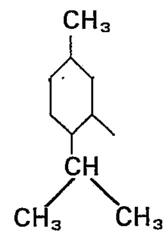

or

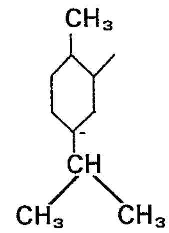

characterized in that a monomer of the formula 1

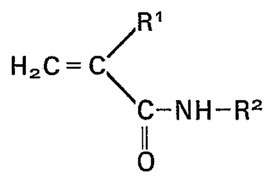

(1)

with the definitions for $R^1$ and $R^2$ designated above, is polymerized, in a manner known per se, with 0.5 to 50 mol-%, relative to 1 mol of monomer, of a suitable crosslinker.

14. Process according to Claim 13, characterized in that 1 to 20 mol-% of the crosslinker are used.

15. Process according to Claim 13, characterized in that 5 to 15 mol-% of the crosslinker are used.

16. Process according to Claims 13 to 15, characterized in that a compound having at least two vinyl groups is used as crosslinker.

17. Process according to Claims 13 to 16, characterized in that the polymerization is carried out as suspension polymerization.

18. Process according to Claims 13 to 17, characterized in that polymerization is carried out at temperatures from 30 to 100° C.

19. Use of the polymers according to Claims 10 to 12 for the chromatographic separation of racemic mixtures into the optical antipodes.

## Revendications

1. Monomère de (méth)acrylamide optiquement actif de formule générale 1

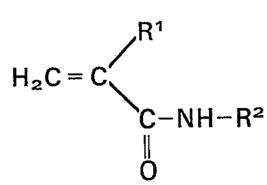

(1)

dans laquelle
$R^1$ est de l'hydrogène ou un méthyle et
$R^2$ un des stéréo-isomères des huit formes stéréo-isomères chaque fois possibles des radicaux optiquement actifs de formules:

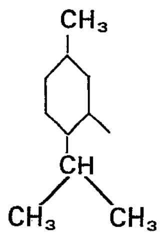

ou

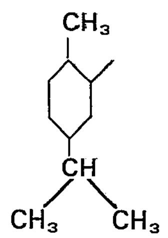

2. Composés selon la revendication 1, dans lesquels
$R^1$ représente de l'hydrogène ou un méthyle et
$R^2$ un stéréo-isomère des huit formes stéréo-isomères chaque fois possibles du radical optiquement actif de formule de structure:

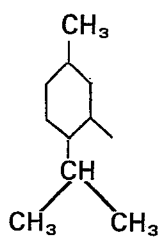

3. l-menthyl(méth)acrylamide.
4. d-menthyl(méth)acrylamide.
5. d-néomenthyl(méth)acrylamide.
6. Procédé de fabrication de monomères de (méth)acrylamide optiquement actifs de formule générale:

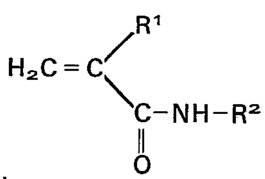

(1)

dans laquelle
$R^1$ représente de l'hydrogène ou un méthyle et
$R^2$ un des stéréo-isomères des huit formes stéréo-isomères chaque fois possibles des radicaux optiquement actifs de formules:

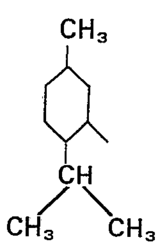

ou

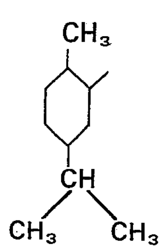

caractérisé en ce qu'on fait réagir des amines optiquement actives de formule (2)

$$R^2-NH_2 \qquad (2)$$

dans laquelle
$R^2$ a la signification indiquée plus haut, ou leurs produits d'addition d'acides avec des dérivés d'acide acrylique de formule (3)

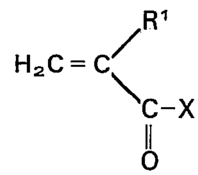

(3)

dans laquelle
X représente un groupe clivable et
$R^1$ a la signification indiquée plus haut, éventuellement en présence d'une base dans des solvants organiques inertes.

7. Procédé selon la revendication 6 pour la préparation de l-menthyl(méth)acrylamide, de d-menthyl(méth)acrylamide ou de d-néomenthyl-(méth)acrylamide.
8. Procédé selon les revendications 6 et 7, caractérisé en ce qu'on exécute la réaction à des températures de −20 à +100° C.
9. Procédé selon les revendications 6 à 8, caractérisé en ce qu'on utilise comme bases un hydroxyde alcalin et/ou alcalino-terreux, un carbonate alcalin et/ou alcalino-terreux, des alcoolates alcalins ou des amines.
10. Polymères optiquement actifs et réticulés contenant l'unité de structure récurrente:

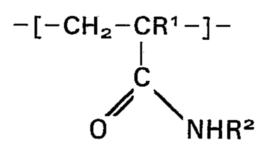

dans lesquels
$R^1$ est de l'hydrogène ou un méthyle et
$R^2$ un des stéréo-isomères des huit formes stéréo-isomères chaque fois possibles des radicaux optiquement actifs de formules:

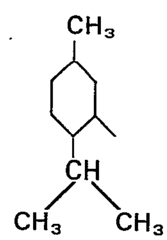

ou

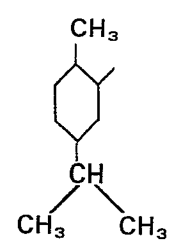

11. Polymères optiquement actifs et réticulés selon la revendication 10, ayant les propriétés suivantes:
degré de gonflement

$$\left[\frac{\text{volume gonflé}}{\text{volume non gonflé}}\right]: 1,1\text{-}5;$$

mesuré dans du toluène/ester acétique (rapport en volume de 3:2),
volume en vrac (ml/g): 1,5-2,5;
granulométrie (µm): 1-500,
teneur en azote (%) (sans N dans le réticulant): 3,5-6,3
teneur en azote (%) (avec N dans le réticulant): 6,3-13.

12. Poly-l-menthyl(méth)acrylamide, poly-d-menthyl(méth)acrylamide ou poly-d-néomenthyl(méth)acrylamide optiquement actif et réticulé.

13. Procédé de préparation de polymères optiquement actifs et réticulés contenant l'unité structurale récurrente:

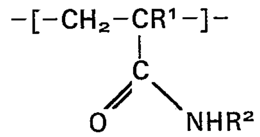

dans lesquels
$R^1$ est de l'hydrogène ou un méthyle et
$R^2$ un des stéréo-isomères des huit formes stéréoisomères chaque fois possibles des radicaux optiquement actifs de formules

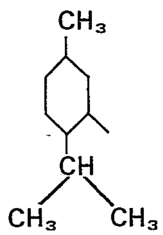

ou

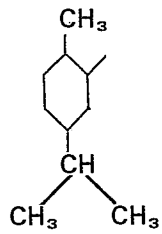

caractérisé en ce qu'on polymérise d'une manière connue en elle-même un monomère de formule 1

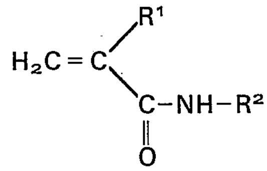

(1)

répondant aux définitions indiquées plus haut pour $R^1$ et $R^2$, avec 0,5 à 50% par mole de monomère d'un réticulant approprié.

14. Procédé selon la revendication 13, caractérisé en ce qu'on utilise 1 à 20 moles % du réticulant.

15. Procédé selon la revendication 13, caractérisé en ce qu'on utilise 5 à 15 moles % du réticulant.

16. Procédé selon les revendications 13 à 15, caractérisé en ce qu'on utilise comme réticulant un composé ayant au moins deux groupes vinyle.

17. Procédé selon les revendications 13 à 16, caractérisé en ce qu'on exécute la polymérisation sous la forme d'une polymérisation en suspension.

18. Procédé selon les revendications 13 à 17, caractérisé en ce qu'on polymérise à des températures de 30 à 100° C.

19. Utilisation des polymères selon les revendications 10 à 12 pour la séparation chromatographique de mélanges racémiques en les antipodes optiques.